# EUROPÄISCHE PATENTANMELDUNG

(11) **EP 2 325 243 A2**
(43) Veröffentlichungstag der Anmeldung: **25.05.2011**
(21) Anmeldenummer: 10189842.7
(22) Anmeldetag: 03.11.2010
(51) Int. Cl.: C08K 5/053, C08L 69/00, C08L 71/00

(54) **Polycarbonate mit verbesserter Transmission**

(30) Priorität: 07.11.2009 DE 102009052363
(71) Anmelder: Bayer MaterialScience AG, 51368 Leverkusen (DE)
(72) Erfinder: Krauter, Berit, 41464, Neuss (DE); Prein, Michael, Krefeld, 47809 (DE)

(57) **Zusammenfassung**

Die vorliegende Erfindung betrifft eine Zusammensetzung enthaltend Polycarbonat und 0,01 Gew.-% bis <0,30, Gew.-% Polyol und/oder Polyetherpolyole.

## Beschreibung

Die vorliegende Erfindung betrifft Zusammensetzungen enthaltend Polycarbonat und mindestens ein Polyol, die verbesserte optische Eigenschaften aufweisen.

Transparente Kunststofformmassen mit einer hohen Transmission und geringer Trübung werden für eine Vielzahl von Anwendungen eingesetzt, z.B. zur Herstellung von Brillengläser oder Kunststoffstreuscheiben, wobei diese bevorzugt über Spritzgussverfahren hergestellt werden. Darüber hinaus werden diese Kunststofformmassen auch in Automobilverscheibungen eingesetzt werden, die wahlweise sowohl im Spritzguss- als auch durch Extrusionverfahren hergestellt werden können. Ein weiteres Anwendungsgebiet dieser Kunststofformmassen ist die Herstellung transparenter Architekturverscheibungen.Eine Trübung der Materialien führt dazu, dass die Durchsicht durch die aus den Materialien hergestellten Formmassen, z.B. Verscheibungen oder Brillengläsen, unerwünscht beeinträchtigt wird, wobei der Trübungseffekt exponentiell mit der Dicke des Materials ansteigt. Bei Materialien zur Herstellung von Verscheibungen oder optischen Geräten ist daher eine möglichst geringe Trübung und eine möglichst hohe Transmission der transparenten, thermoplastisch verarbeitbaren Zusammensetzungen gefordert, wobei in der Vergangenheit die Verbesserung dieser Eigenschaften Gegenstand vieler Forschungsprojekte war.

In JP-A 02-202544 werden Polycarbonat-Zusammensetzungen, die 0,1 Gew. % Kaliumdiphenylsulfonat und 0,3 Gew. % Polyethylenglykol mit einem Molekulargewicht von 600 bzw. 3400 enthalten (s. Beispiele) beschrieben, wobei ausdrücklich darauf hingewiesen wird, dass die Transparenz von Zusammensetzungen, die Polyalkylenglykol mit einem Molekulargewicht > 1000 enthalten, abnimmt.

Die WO 2000/52098 beschreibt thermoplastische Zusammensetzungen, die ein thermoplastisches Harz ausgewählt aus der Gruppe, die Cycloolefinpolymere, Polycyclohexanharze und 4-Methyl-1-penten-Polymere umfaßt, weniger als 20 Gew.-% aromatische Ringe aufweisen und einen mehrwertigen Alkohol mit mindestens 6 C-Atomen bei einem Verhältnis von C-Atomen zu Hydroxylgruppen von 1,5 bis 30 enthalten, wobei die Trübung bei einer Schichtdicke von 3 mm weniger als 10 % beträgt und die Transmission > 80 ist.

In EP 680 996 werden thermoplastische Harze beschrieben, die durch den Zusatz von optischen Aufhellern auf der Basis von Benzoxazolyl verbesserte optische Eigenschaften aufweisen.

Aus der DE 10 2007 052 783 A1 sind flammwidrige Polycarbonatzusammensetzungen mit Polyolen bekannt, die Polycarbonat, Polyol und ein Alkali- oder Erdalkalisalz einer aliphatischen oder aromatischen Sulfonsäure, Sulfonamids oder Sulfonimids enthalten. Die Aufgabe der DE 10 2007 052 783 A1 war es, transparente Zusammensetzungen bereitzustellen, die eine deutlich verbesserte Flammwidrigkeit bei Wandstärken ≤ 3 mm aufweisen. Ein Einfluß der Polyole auf die Verbesserung der optischen Eigenschaften der Zusammensetzungen wurde in der Anmeldung jedoch weder beobachtet noch nahegelegt.

Trotz aller bisherigen Bemühungen besteht nach wie vor ein Bedarf an Polycarbonatzusammensetzungen mit einer verbesserten Transmission und verminderten Trübung, insbesondere zur Herstellung von spritzgegossenen, unlackierten Erzeugnissen. In besonderem Maße gilt dies für transparente Zusammensetzungen bzw. für transparente Erzeugnisse, die zur Herstellung von Verscheibungen und optischen Geräten und Teilen verwendet werden sollen.

Es war daher eine Aufgabe der vorliegenden Erfindung, transparente Polycarbonatzusammensetzungen bereitzustellen, welche eine deutlich verbesserte Transmission und eine reduzierte Trübung aufweisen, sowie Verfahren zu Ihrer Herstellung und aus den Zusammensetzungen hergestellte Formteile.

Überraschenderweise wurde gefunden, dass Zusammensetzungen gemäß Anspruch 1 der vorliegenden Erfindung, die Polycarbonat und geringe Mengen Polyol enthalten, ein ausgezeichnetes Eigenschaftsbild hinsichtlich erhöhter Transmission aufweisen, insbesondere bei Polyolen mit einem Molekulargewicht > 1000 und einer insgesamt geringen Konzentration an Polyol.

Die vorliegende Erfindung betrifft daher Zusammensetzungen enthaltend Polycarbonat und 0,01 Gew.-% bis < 0,30 Gew.-% Polyol, wobei das Polyol vorzugsweise ein Molekulargewicht > 1000 aufweist.

Die vorliegende Erfindung betrifft auch ein Verfahren zur Herstellung einer erfindungsgemäßen Zusammensetzung, bei dem das Polycarbonat und mindestens ein Polyol zusammengeführt und vermischt werden.

Die erfindungsgemäßen Zusammensetzungen enthalten keine Flammschutzmittel.

In einer bevorzugten Ausführungsform liegt bei der Mischung mindestens eine Komponente in Lösungsmittel gelöst vor, das nach dem Mischen wieder entfernt wird, wobei die Mischung vor dem Entfernen des Lösungsmittels zusätzlich homogenisiert werden kann.

Das so erhaltene Polymercompound kann in einem nächsten Schritt granuliert und direkt zu Formteilen weiterverarbeitet werden.

Polycarbonate für die erfindungsgemäßen Zusammensetzungen sind Homopolycarbonate, Copolycarbonate und thermoplastische, vorzugsweise aromatische, Polyestercarbonate, die in der vorliegenden Anmeldung unter der Bezeichnung "Polycarbonat" subsummiert werden.

Die erfindungsgemäßen Homopolycarbonate, Copolycarbonate und Polyestercarbonate haben im Allgemeinen mittlere Molekulargewichte (Gewichtsmittel) von 2 000 bis 200 000, bevorzugt 3 000 bis 150 000, weiter bevorzugt 5 000 bis 100 000, noch weiter bevorzugt 8 000 bis 80 000, besonders bevorzugt 12 000 bis 70 000 (bestimmt nach GPC mit Polycarbonat-Eichung), und am stärksten bevorzugt mittlere Molekulargewichte M̅ _{w} von 16.000 bis 40.000 g/mol.

Zur Herstellung von Polycarbonaten für die erfindungsgemäßen Zusammensetzungen sei beispielhaft auf Schnell, "Chemistry and Physics of Polycarbonats", Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Morristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird zunächst beispielhaft an dem Phasengrenzflächenverfahren beschrieben.

Als Ausgangsverbindungen bevorzugt einzusetzende Verbindungen sind Bisphenole der allgemeinen Formel (1) 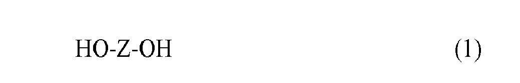 worin Z ein divalenter organischer Rest mit 6 bis 30 Kohlenstoffatomen ist, der eine oder mehrere aromatische Gruppen enthält.

Bevorzugt steht Z in Formel (1) für einen Rest der Formel (1 a) 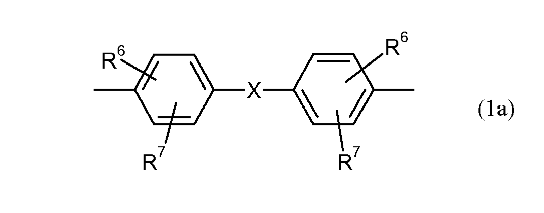 in der
R⁶ und R⁷ unabhängig voneinander für H, C₁-C₁₈-Alkyl-, C₁-C₁₈-Alkoxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
X für eine Einfachbindung, -SO₂-, -CO-, -O-, -S-, C₁- bis C₆-Alkylen, C₂- bis C₅-Afiyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C₅ bis C₆-Cycloalkyliden, -O-, -SO-, -CO-, -S-, -SO₂-,
oder ein für einen Rest der Formel (1b) oder (1c) 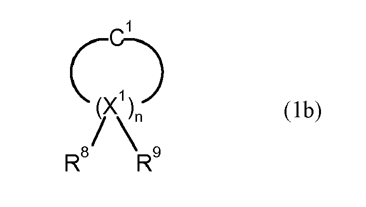 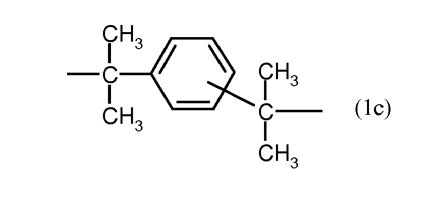 wobei
R⁸ und R⁹ für jedes X¹ individuell wählbar, unabhängig voneinander Wasserstoff oder C₁ bis C₆-Alkyl, vorzugsweise Wasserstoff, Methyl oder Ethyl bedeuten und
X¹ Kohlenstoff und
n eine ganze Zahl von 4 bis 7, bevorzugt 4 oder 5 bedeuten, mit der Maßgabe, dass an mindestens einem Atom X¹, R⁸ und R⁹ gleichzeitig Alkyl sind.

Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und a,a'-Bis(hydroxyphenyl)-düsopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendüsopropyl)diphenol (Bisphenol M), 4,4-(para-Phenylendüsopropyl)diphenol, N-Phenyl-Isatinbisphenol, 1,1-Bis-(4-hydroxyphenyl)-3,3,5-trimethylcyclohexan (BP-TMC), Bisphenole vom Typ der 2-Hydrocarbyl-3,3-bis(4-hydroxyaryl)phthalimidine, insbesondere 2-Phenyl-3,3-bis(4-hydroxyphenyl)phthalimidin, sowie gegebenenfalls deren Gemische.

Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol. Vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Isatinbiskresol, Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenyl-methan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-p r o p an; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2,00 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Es können Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol-%, bevorzugt 2-10 Mol-%, je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Das erfindungsgemäß bevorzugte Polycarbonat ist Bisphenol-A-Homopolycarbonat.

Alternativ können die erfindungsgemäßen Polycarbonate auch nach dem Schmelzumesterungsverfahren hergestellt werden. Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-B 10 31 512 beschrieben.

Beim Schmelzumesterungsverfahren werden die bereits beim Phasengrenzflächenverfahren beschriebenen aromatischen Dihydroxyverbindungen, mit Kohlensäurediestern unter Zuhilfenahme von geeigneten Katalysatoren und gegebenenfalls weiteren Zusatzstoffen in der Schmelze umgeestert Kohlensäurediester im Sinne der Erfindung sind solche der Formel (2) und (3) 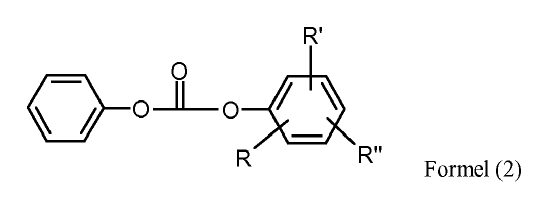 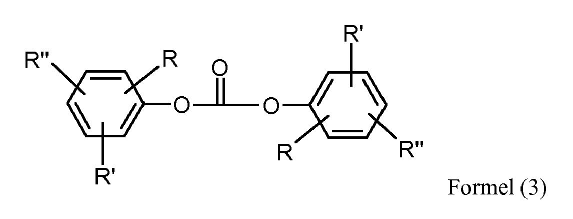 wobei
R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
   beispielsweise
Diphenylcarbonat, Butylphenyl-phenylcarbonat, Di-Butylphenylcarbonat, Isobutylphenyl-phenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)carbonat, Cumylphenyl-phenylcarbonat, Di-Cumylphenylcarbonat,
Naphthylphenyl-phenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenyl-phenylcarbonat, Di-(4-Phenoxyphenyl)carbonat, 3-Pentadecylphenyl-phenylcarbonat, Di-(3-Pentadecylphenyl)carbonat, Tritylphenyl-phenylcarbonat, Di-Tritylphenylcarbonat,
   bevorzugt
Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat, besonders bevorzugt Diphenylcarbonat.

Es können auch Mischungen der genannten Kohlensäurediester eingesetzt werden.

Der Anteil an Kohlensäureester beträgt 100 bis 130 mol-%, bevorzugt 103 bis 120 mol-%, besonders bevorzugt 103 bis 109 mol-%, bezogen auf die Dihydroxyverbindung.

Als Katalysatoren im Sinne der Erfindung werden im Schmelzumesterungsverfahren wie in der genannten Literatur beschrieben basische Katalysatoren wie beispielsweise Alkali- und Erdalkalihydroxide und -oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der Formel (4) 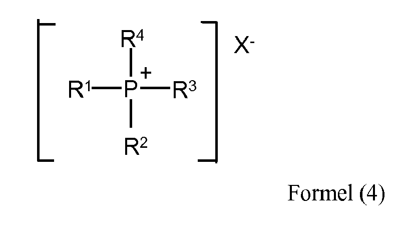 wobei
R¹⁻⁴ dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und
X⁻ ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann. Bevorzugte Katalysatoren sind
Tetraphenylphosphoniumchlorid, Tetraphenylphosphoniumhydroxid, Tetraphenylphosphoniumphenolat, und besonders bevorzugt Tetraphenylphosphoniumphenolat.

Die Katalysatoren werden bevorzugt in Mengen von 10⁻⁸ bis 10⁻³ mol, bezogen auf ein Mol Bisphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat.

Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 bis 250°C, bevorzugt 100 bis 230°C, besonders bevorzugt 120 bis 190°C unter normalem Druck in 0 bis 5 Stunden, bevorzugt 0,25 bis 3 Stunden statt. Nach Zugabe des Katalysators wird durch Anlegen von Vakuum (bis zu einem Druck von 2,6 mbar in der Apparatur) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse Mw (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 bis 320°C, bevorzugt 270 bis 295°C bei einem Druck von <2,6 mbar das Polycarbonat hergestellt, wobei der Rest an Brüden aus dem Prozess entfernt wird.

Die Katalysatoren können auch in Kombination (zwei oder mehrere) miteinander eingesetzt werden.

Beim Einsatz von Alkali-/Erdalkalimetallkatalysatoren werden die Alkali-/ Erdalkalimetallkatalysatoren bevorzugt zu einem späteren Zeitpunkt (z. B. nach der Oligocarbonatsynthese bei der Polykondensation in der zweiten Stufe) zugesetzz.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfem, Rührkesselkaskaden, Extrudern, Knetern, einfachen Scheibenreaktoren und Hochviskosscheibenreaktoren.

Analog zum Phasengrenzflächenverfahrens können durch Einsatz mehrfunktioneller Verbindungen verzweigte Poly- oder Copolycarbonate hergestellt werden.

Den erfindungsgemäßen Polycarbonaten können noch andere aromatische Polycarbonate zugemischt werden, beispielsweise durch Compoundierung.

Den erfindungsgemäßen Polycarbonaten sowie den ggf. weiteren enthaltenen Kunststoffen können noch die für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten und/oder das Fließverhalten noch durch Zusatz externer Entformungsmittel und/oder Fließmittel, verbessert werden (z. B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination). Thermostabilisatoren wie beispielsweise und bevorzugt Tris-(2,4-di-tert, -butylphenyl)phosphat oder Triphenylphosphin werden bevorzugt in einer Menge von 10 bis 3000 ppm, bezogen auf die Gesamtzusammensetzung, zugesetzt.

Solche Verbindungen werden z. B. in WO 99/55772 A1, S. 15 - 25, EP 1 308 084 und in den entsprechenden Kapiteln des "Plastics Additives Handbook" , ed. Hans Zweifel, 5^{th} Edition 2000, Hanser Publishers, Munich beschrieben.

Polyole im Rahmen der vorliegenden Erfindung sind solche mit zahlengemittelten Molekulargewichten von 1100 bis 20000, bevorzugt von 1200 bis 8000, besonders bevorzugt 1500 bis 7500, ganz besonders bevorzugt von 2000 bis 7000, und weiter bevorzugt von 2500 - 6000.

In einer weiteren bevorzugten Ausführungsform werden Polyole mit einem mittleren Molekulargewicht von 2500 - 3500 bevorzugt.

Die Funktionalität der Polyole ist 1,5 bis 8,0 vorzugsweise 2,0 bis 4,0, wobei die Funktionalität definiert ist als die mittlere Anzahl der Hydroxylgruppen.

Als Handelsprodukte ist z.B. das Polytetrahydrofuran-Homopolymerisat Terathane® 2900 (M_{w} = 2900) der Firma Du Pont geeignet. Geeignete Polyetherpolyole sind auch Blockcopolymerisate und Copolymerisate mit unregelmäßiger Folge der Kettenbausteinen sowie Mischungen der Polyetherpolyole.

Polyetherpolyole können nach bekannten Verfahren, hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das reaktive Wasserstoffatome enthält oder durch kationische Polymerisation von Alkylenoxiden in Gegenwart von Lewis-Säuren wie Antimonpentachlorid oder Borfluorid-Etherat oder durch Doppelmetallcyanid (DMC)-Katalyse. Geeignete Alkylenoxide enthalten 2 bis 4 Kohlenstoffatome im Alkylenrest. Beispiele sind Tetrahydrofuran, 1,2-Propylenoxid, 1,2- bzw. 2,3-Butylenoxid. Die Alkylenoxide können einzeln, alternierend nacheinander oder als Mischungen verwendet werden. Als Startermolekül kommen Wasser oder 2- und 3-wertige Alkohole in Betracht, wie Ethylenglykol, 1,2-Propandiol und 1,3-Propandiol, Diethylenglykol, Dipropylenglykol, Ethandiol-1,4, Glycerin, Trimethylolpropan usw.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril gewonnen werden können.

Als weitere Polyole können die mindestens zwei, vorzugsweise 2 bis 4 Hydroxylgruppen und in der Regel ein zahlengemitteltes Molekulargewicht von 1200 - 8000 aufweisenden Polyester, Polyacetale, Polycarbonate und Polyesteramide verwendet werden, wobei in einer besonderen Ausführungsform die homologen Polythioether verwendet werden.

Bei den bifunktionellen Polyether-Derivaten kann es sich um ein Homopolymerisat, um ein Blockcopolymerisat oder um ein Copolymerisat mit unregelmäßiger Folge der Kettenbausteine handeln. Mischungen der Polyester und Polyether können selbstverständlich eingesetzt werden.

Bevorzugte Polyetherpolyole sind Polyethylenglycol, Polypropylenglycol und Polytetrahydrofuran, wobei Polytetrahydrofuran besonders bevorzugt ist.

Die genannten Polyole können im Rahmen der vorliegenden Erfindung sowohl alleine als auch als Mischungen verschiedener Polyole eingesetzt werden. Der Anteil an Polyol bzw. an Polyolen in den erfindungsgemäßen Zusammensetzungen beträgt 0,01 Gew.-% bis < 0,30 Gew.-%, bevorzugt 0,05 Gew.-% bis 0,28 Gew.-%, weiter bevorzugt 0,06 Gew.-% bis 0,27 Gew.-%, und besonders bevorzugt 0,10 bis 0,25 Gew.-%, jeweils bezogen auf die Gesamtzusammensetzung. Ein Polyol-Gehalt von 0,25 Gew.-% ist besonders bevorzugt.

### Herstellung der Zusammensetzungen:

Die Herstellung einer Zusammensetzung enthaltend Polycarbonat und mindestens ein Polyol erfolgt mit gängigen Einarbeitungsverfahren und kann beispielsweise durch Vermischen von Lösungen des Polyols mit einer Lösung von Polycarbonat in geeigneten Lösungsmitteln wie Dichlormethan, Halogenalkanen, Halogenaromaten, Chlorbenzol und Xylolen erfolgen, wobei die Lösungsgemische anschließend optional homogenisiert und in einem nächsten Schritt in bekannter Weise durch Ausdampfen des Lösungsmittels und anschließender Extrusion aufgearbeitet werden. Die Aufarbeitung erfolgt dabei vorzugsweise in einem Ausdampfextruder.

In einer alternativen Ausführungsform werden die Komponenten als Feststoffe eingesetzt und in bekannter Weise durch Extrusion homogenisiert. Hierzu werden die Komponenten der Zusammensetzungen in üblichen Mischvorrichtungen wie Schneckenextrudern (zum Beispiel Zweischneckenextruder, ZSK), Kneter, Brabender- oder Banbury-Mühlen gemischt und anschließend extrudiert werden. Nach der Extrusion kann das Extrudat abgekühlt und zerkleinert werden.

In einer weiteren bevorzugten Ausführungsform werden einzelne Komponenten vorgemischt und anschließend die restlichen Ausgangsstoffe einzeln und/oder ebenfalls gemischt hinzugegeben werden.
1. In einer weiteren bevorzugten Ausführungsform umfaßt das Verfahren zur Herstellung von transparenten thermoplastischen Zusammensetzungen nach einem der Ansprüche 1-10, die Schritte:
   a) Herstellen einer Mischung aus einer Pulvermischung aus Polycarbonat mit mindestem einem Polyol,
   b) optional Zusetzen von üblichen Additiven zu der Mischung a),
   c) Extrusion des Gemisches des Schrittes a) oder b) mit einem weiteren Polycarbonat bei einer Temperatur von 280 bis 330 °C.

Die erfindungsgemäßen Zusammensetzungen können in bekannter Weise aufgearbeitet und zu beliebigen Formkörpern verarbeitet werden, beispielsweise durch Extrusion, Spritzguss oder Extrusionsblasformen.

Bei der Herstellung von Platten gemäß der vorliegenden Erfindung wird das Polycarbonat-Granulat des Basismaterials dem Fülltrichter des Hauptextruders zugeführt, das Coextrusionsmaterial dem des Coextruders. Im jeweiligen Plastifiziersystem Zylinder/Schnecke erfolgt das Aufschmelzen und Fördern des jeweiligen Materials. Beide Materialschmelzen werden im Coexadapter zusammengeführt und bilden nach Verlassen der Düse und Abkühlen einen Verbund. Die weiteren Einrichtungen dienen dem Transport, Ablängen und Ablegen der extrudierten Platten.

Platten ohne Coextrusionsschicht werden entsprechend hergestellt, indem entweder der Coextruder nicht betrieben wird oder mit der gleichen Polymerzusammensetzung wie der Hauptextruder befüllt wird.

Das Blasformen von Polycarbonat ist unter anderem in der DE 102 29 594 und hier zitierter Literatur näher beschrieben.

### Beispiele:

### Optische Messungen:

Die Trübungs- und Transmissionsbestimmungen erfolgten an Platten der Geometrie 60 * 40 * 4 mm³ gemäß ISO 13468.

Der Yellowness-Index YI wird nach ASTM E313 berechnet.

Molekulargewichtsbestimmungen:
Die Bestimmung des mittleren Molekulargewichts erfolgt über Gelpermeationschromatographie (GPC) mit einem geeichten Standard.

### Herstellung der Zusammensetzungen:

Bei der Herstellung der Zusammensetzungen in den Beispielen und Vergleichsbeispielen 1-16 wird so vorgegangen, dass zu 95 Gew.-% Makrolon^{®} Granulat 5 Gew.-% einer Pulvermischung aus Makrolon^{®} 3108 Pulver, das die in den Beispielen genannten Substanzen enthält, zudosiert wird, so dass die in den Beispielen genannten Zusammensetzungen resultieren.

Die Zusammensetzungen gemäß der vorliegenden Erfindung werden in einer Vorrichtung umfassend: Eine Dosiereinrichtung für die Komponenten, einem gleichlaufenden Zweiwellenkneter (ZSK 25 von der Firma Werner & Pfleiderer) mit einem Schneckendurchmesser von 25 mm, einer Lochdüse zur Ausformung von Schmelzesträngen, einem Wasserbad zur Abkühlung und dem Verfestigen der Stränge und einem Granulator compoundiert.

Für die Herstellung der Zusammensetzungen der Beispiele und Vergleichsbeispiele 1 bis 16 in der oben beschriebenen Compoundiereinrichtung wurden folgende Komponenten eingesetzt:
PC A:
   Polycarbonat (Granulat): Polycarbonat (Basis Bisphenol A) Die Schmelze-Volumenfließrate (MVR) nach ISO 1133 beträgt 9,5 cm³/(10 min) bei 300 °C und 1,2 kg Belastung. (Makrolon® 2808, Farbe 000000 der BayerMaterialScience AG).
PC A1:
   Polycarbonat (Granulat): Polycarbonat (Basis Bisphenol A) Die Schmelze-Volumenfließrate (MVR) nach ISO 1133 beträgt 9,5 cm³/(10 min) bei 300 °C und 1,2 kg Belastung. (Makrolon® 2808, Farbe 000000 der BayerMaterialScience AG). (PC A und PC A1 sind gleiche Polycarbonate unterschiedlicher Produktionscharge)
PC B:
   Polycarbonat (Granulat): Polycarbonat (Basis Bisphenol A) Die Schmelze-Volumenfließrate (MVR) nach ISO 1133 beträgt 6,0 cm³/(10 min) bei 300 °C und 1,2 kg Belastung. (Makrolon® 3108, Farbe 000000 der BayerMaterialScience AG).
PC B1:
   Polycarbonat (Granulat): Polycarbonat (Basis Bisphenol A) Die Schmelze-Volumenfließrate (MVR) nach ISO 1133 beträgt 6,0 cm³/(10 min) bei 300 °C und 1,2 kg Belastung. (Makrolon® 3108, Farbe 550115 der BayerMaterialScience AG).
PC C:
   Polycarbonat (Granulat): Polycarbonat (Basis Bisphenol A) Die Schmelze-Volumenfließrate (MVR) nach ISO 1133 beträgt 19,0 cm³/(10 min) bei 300 °C und 1,2 kg Belastung. (Makrolon® 2408, Farbe 000000 der BayerMaterialScience AG).
PC D:
   Polycarbonat (Granulat): Polycarbonat (Basis Bisphenol A) Die Schmelze-Volumenfließrate (MVR) nach ISO 1133 beträgt 12,5 cm³/(10 min) bei 300 °C und 1,2 kg Belastung. (Makrolon® AL2647, Farbe 000000 der BayerMaterialScience AG).
PC E:
   Polycarbonat (Granulat): Polycarbonat (Basis Bisphenol A) Die Schmelze-Volumenfließrate (MVR) nach ISO 1133 beträgt 6,0 cm³/(10 min) bei 300 °C und 1,2 kg Belastung. (Makrolon® 3108, Farbe 000000 der BayerMaterialScience AG).
PTHF:
   Polytetrahydrofuran mit einem mittleren Molekulargewicht von 2900 (Terathane® 2900 der Firma Du Pont).
PEG:
   Polyethylenglykol mit einem mittleren Molekulargewicht von ca. 8000 (Fa. Aldrich).
PPG:
   Polypropylenglykol mit einem mittleren Molekulargewicht von ca. 3500 (Fa. Aldrich).

Die nachfolgende Tabelle 1 zeigt die optischen Eigenschaften "Transmission" und "YI" der erfindungsgemäßen Polycarbonatzusammensetzungen 2, 3, 5, 6, 7, 9, 10, 12, 14 und 16 im Vergleich zu den jeweils korrespondierenden Vergleichsbeispielen 1, 4, 8, 11, 13 und 15.

**Tabelle 1**

| Zusammen-setzung [Gew.-%] | Vgl. 1 | Bsp. 2 | Bsp. 3 | Vgl. 4 | Bsp. 5 | Bsp. 6 | Bsp. 7 | Vgl. 8 | Bsp. 9 | Bsp. 10 | Vgl. 11 | Bsp. 12 | Vgl. 13 | Bsp. 14 | Vgl. 15 | Bsp. 16 |
|---|---|---|---|---|---|---|---|---|---|---|---|---|---|---|---|---|
| PC A | 95 | 95 | 95 | | | | | | | | | | | | | |
| PC A1 | | | | | | | | | | | | | 95 | 95 | | |
| PC B | | | | 95 | 95 | 95 | 95 | | | | | | | | | |
| PC B1 | | | | | | | | | | | | | | | 95 | 95 |
| PC C | | | | | | | | 95 | 95 | 95 | | | | | | |
| PC D | | | | | | | | | | | 95 | 95 | | | | |
| PC E | 5 | 4,9 | 4,75 | 5 | 4,95 | 4,9 | 4,75 | 5 | 4,9 | | 5 | 4,9 | 5 | 4,9 | 5 | 4,75 |
| | | | | | | | | | | | | | | | | |
| PTHF | | 0,1 | 0,25 | | 0,05 | 0,1 | 0,25 | | 0,1 | 0,25 | | 0,1 | | | | |
| PPG | | | | | | | | | | | | | | 0,1 | | |
| PEG | | | | | | | | | | | | | | | | 0,25 |
| | | | | | | | | | | | | | | | | |
| Trübung | 0,361 | 0,212 | 0,184 | 3,569 | 1,151 | 0,338 | 0,267 | 0,309 | 0,211 | 0,158 | 1,345 | 0,343 | 0,260 | 0,250 | 0,320 | 0,290 |
| Transmis- sion | 88,82 | 89,17 | 89,30 | 83,70 | 85,06 | 85,43 | 85,53 | 88,62 | 88,70 | 88,68 | 86,48 | 86,90 | 84,63 | 84,89 | 83,82 | 84,31 |
| Yellowness Index | 2,87 | 2,43 | 1,97 | 2,01 | 1,43 | 1,12 | 0,36 | 1,44 | 1,30 | 0,99 | 0,90 | 0,30 | 2,91 | 2,45 | 4,39 | 3,33 |

Wie aus Tabelle 1 klar ersichtlich ist, werden die optischen Eigenschaften der Zusammensetzungen durch die Zugabe von Polyolen bereits ab einem Anteil von 0,05 Gew.-% bezogen auf die Gesamtzusammensetzung deutlich verbessert. Während der Yellowness-Index nach der Zugabe der Polyol-Komponente deutlich sinkt, steigt die Transmission an.

## Patentansprüche

1. Zusammensetzung enthaltend
a) Polycarbonat und
b) 0,01 Gew.-% bis <0,30 Gew.-% Polyol und/oder Polyetherpolyole.

2. Zusammensetzung nach Anspruch 1, **dadurch gekennzeichnet, dass** der Anteil an Polyol und/oder Polyetherpolyol 0,05 Gew% bis 0,28 Gew%, vorzugsweise 0,06 Gew% bis 0,27 Gew.- %, und besonders bevorzugt von 0,10 Gew% bis 0,25 Gew.-%, beträgt..

3. Zusammensetzung nach einem der vorhergehenden Ansprüche, **dadurch gekennzeichnet, dass** das Polyol ein Molekulargewicht von 1100 bis 20000 aufweist.

4. Zusammensetzung nach einem der vorhergehenden Ansprüche, **dadurch gekennzeichnet, dass** das Polyol ein Molekulargewicht von 2500 bis 3500 aufweist.

5. Zusammensetzung gemäß Anspruch 1, **dadurch gekennzeichnet, dass** das Polyol ein Polyetherpolyol ist.

6. Zusammensetzung gemäß Anspruch 1, **dadurch gekennzeichnet, dass** das Polyetherpolyol ein Polyalkylenpolyol mit 2 bis 4 C-Atomen im Alkylen ist.

7. Zusammensetzung nach Anspruch 6, **dadurch gekennzeichnet, dass** das Polyetherpolyol ausgewählt ist aus der Gruppe, die Polyethylenglycol, Polypropylenglycol und Polytetrahydrofuran umfaßt.

8. Zusammensetzung gemäß Anspruch 6, **dadurch gekennzeichnet, dass** das Polyol Polytetrahydrofuran ist.

9. Zusammensetzung nach einem der vorhergehenden Ansprüche, **dadurch gekennzeichnet, dass** das Polycarbonat ein mittleres Molekulargewicht M̅ _{w} von 16.000 bis 40.000 g/mol aufweist.

10. Zusammensetzung nach einem der vorhergehenden Ansprüche, **dadurch gekennzeichnet, dass** die Zusammensetzung mindestens ein Additiv enthält, ausgewählt aus der Gruppe, die Füllstoffe, UV-Stabilisatoren, Thermostabilisatoren, Antistatika, Pigmente, Entformungsmittel und Fließmittel umfaßt.

11. Zusammensetzung nach Anspruch 1, bestehend aus
a) 95,00 Gew.-% Polycarbonat auf Bisphenol A-Basis mit einer Schmelze-Volumenfließrate nach ISO 1133 von 9,5 cm³/10 min bei 300 °C und 1,2 kg Belastung;
b) 4,75 Gew% - 4,95 Gew.-% Polycarbonat auf Bisphenol A-Basis mit einer Schmelze-Volumenfließrate nach ISO 1133 von 6,0 cm³/10 min bei 300 °C und 1,2 kg Belastung; und
c) 0,05 Gew% - 0,25 Gew.-% Polytetrahydrofuran mit einem mittleren Molekulargewicht von 2900.

12. Erzeugnis enthaltend eine Zusammensetzung nach einem der Ansprüche 1 bis 10.

13. Erzeugnis gemäß Anspruch 12, **dadurch gekennzeichnet, dass** das Erzeugnis im Spritzgussverfahren hergestellt wird.

14. Verfahren zur Herstellung von transparenten thermoplastischen Zusammensetzungen nach einem der Ansprüche 1-10, umfassend die Schritte:
a) Herstellen einer Mischung aus einer Polycarbonatlösung mit mindestem einem Polyol,
b) optional Zusetzen von üblichen Additiven zu der Mischung a),
c) Entfernung des Lösungsmittels aus der Mischung nach a) oder b), und
d) Extrusion des Gemisches des Schrittes c) mit einem weiteren Polycarbonat bei einer Temperatur von 280 bis 330 °C.

15. Verwendung der Zusammensetzungen nach einem der Ansprüche 1 bis 11 zur Herstellung von spritzgegossenen, unlackierten Erzeugnissen, von Verscheibungen und optischen Geräten und Teilen.

16. Zusammensetzung bestehend aus
a)Polycarbonat und
b) 0,01 Gew.-% bis <0,30 Gew.-% Polyol und/oder Polyetherpolyole.

17. Zusammensetzung nach Anspruch 1, bestehend aus
a) 95,00 Gew.-% Polycarbonat auf Bisphenol A-Basis mit einer Schmelze-Volumenfließrate nach ISO 1133 von 9,5 cm³/10 min bei 300 °C und 1,2 kg Belastung;
b) 4,75 Gew% - 4,95 Gew.-% Polycarbonat auf Bisphenol A-Basis mit einer Schmelze-Volumenfließrate nach ISO 1133 von 6,0 cm³/10 min bei 300 °C und 1,2 kg Belastung; und
c) 0,05 Gew% - 0,25 Gew.-% Polytetrahydrofuran mit einem mittleren Molekulargewicht von 2900.
